# EUROPÄISCHE PATENTSCHRIFT

(11) **EP 2 666 712 B1**
(45) Veröffentlichungstag und Bekanntmachung des Hinweises auf die Patenterteilung: **11.07.2018**
(21) Anmeldenummer: 13159769.2
(22) Anmeldetag: 18.03.2013
(51) Int. Cl.: B63G 8/36

(54) **Verfahren zur Steuerung eines Kopfventils an einem Schnorchel eines Unterseeboots**
Method for controlling a header valve on a snorkel of a submarine
Procédé de commande d'un clapet d'extrémité sur un snorkel d'un submersible

(30) Priorität: 24.05.2012 DE 102012208758
(43) Veröffentlichungstag der Anmeldung: 27.11.2013
(73) Patentinhaber: ThyssenKrupp Marine Systems GmbH, 24143 Kiel (DE)
(72) Erfinder: König, Alexander, 23701 Eutin-Fissau (DE); Horz, Martin, 24783 Osterrönfeld (DE); Dohrn, Holger, 23689 Techau (DE); Isbrecht, Holger, 24146 Kiel (DE)
(74) Vertreter: thyssenkrupp Intellectual Property GmbH

(56) Entgegenhaltungen:
- WO-A1-03/053776
- DE-A1- 10 318 293
- JP-A- S5 531 672
- US-A- 4 988 885

## Beschreibung

Die Erfindung betrifft ein Verfahren zur Steuerung eines Kopfventils an einem Schnorchel eines Unterseeboots. Ein solches Verfahren ist aus JP55031672 bekannt.

Ferner wird eine Vorrichtung zur Steuerung eines Kopfventils an einem Schnorchel eines Unterseeboots beschrieben.

Insbesondere Unterseeboote, die mit einer Verbrennungskraftmaschine als Energieversorgungsvorrichtung ausgestattet sind, weisen üblicherweise Schnorcheleinrichtungen auf. Mit diesen Schnorcheleinrichtungen werden die Verbrennungskraftmaschinen bei Fahrt in Sehrohrtiefe über einen aus dem Wasser herausragenden Schnorchel mit Luft versorgt.

An dem aus dem Wasser ragenden Schnorchelkopf ist in der Regel ein Kopfventil angeordnet. Dieses Kopfventil soll bei einem Eintauchen des Schnorchelkopfes in einen Wellenberg verhindern, dass Wasser in die Schnorcheleinrichtung eindringen kann. Zum Stand der Technik gehören elektrisch gesteuerte Kopfventile, deren Steuerung mit einem an dem Schnorchelkopf angeordneten Sensor signalverbunden ist. Der Sensor liefert ein Signal "Nass" beim Eintauchen des Sensors in einen Wellenberg sowie ein Signal "Trocken", wenn sich der Sensor oberhalb der Wasseroberfläche befindet. Bei einem Signal "Nass" veranlasst die Steuerung ein Schließen des Kopfventils und bei einem Signal "Trocken" ein Öffnen des Kopfventils. Nachteiligerweise benötigt das System für den Vorgang des Schließens und Öffnens eine Reaktionszeit aufgrund seiner Trägheit. Das hat zur Folge, dass während der zum Schließen des Kopfventils erforderlichen Zeitspanne Wasser in die Schnorcheleinrichtung eindringt, welches mittels Lenzpumpen wieder entfernt werden muss.

Vor diesem Hintergrund liegt der Erfindung die Aufgabe zugrunde, ein Verfahren zur Steuerung eines Kopfventils an einem Schnorchel eines Unterseeboots zu schaffen, durch welches die beim Eintauchen des Schnorchelkopfes in einen Wellenberg in die Schnorcheleinrichtung eindringende Wassermenge zumindest erheblich verringert wird.

Gelöst wird Aufgabe durch ein Verfahren zur Steuerung eines Kopfventils an einem Schnorchel eines Unterseeboots mit den in Anspruch 1 angegebenen Merkmalen. Vorteilhafte Weiterbildungen des Verfahrens nach Anspruch 1 ergeben sich aus dem Unteranspruch, der nachfolgenden Beschreibung sowie der Zeichnung.

Bei dem erfindungsgemäßen Verfahren zur Steuerung eines Kopfventils an einem Schnorchel eines Unterseeboots wird zunächst der zeitliche Verlauf des sich aufgrund des Seegangs ändernden Wasserstandes an dem Schnorchel gemessen. Hierbei ist unter dem Wasserstand der Abstand der Wasseroberfläche von dem Schnorchelkopf bzw. der Abstand der Wasseroberfläche von dem an dem Schnorchelkopf angeordneten Kopfventil zu verstehen. Auf der Grundlage der Messwerte für den Wasserstand wird ein zukünftig zu erwartender Wasserstandsverlauf vorausberechnet und das Kopfventil zumindest auch auf der Grundlage der Vorausberechnung des Wasserstandes gesteuert. Das erfindungsgemäße Verfahren ermöglicht es somit, mit einem geeigneten Extrapolationsverfahren die Zeitpunkte rechnerisch vorauszubestimmen, zu denen der Schnorchelkopf in einen Wellenberg eintaucht. Die Kenntnis dieser Zeitpunkte macht es nun möglich, das an dem Schnorchelkopf angeordnete Kopfventil unter Berücksichtigung dessen trägen Schließverhaltens jeweils rechtzeitig vor dem Eintauchen des Schnorchelkopfes in einen Wellenberg schließend anzusteuern. Es hat sich gezeigt, dass bei dieser Vorgehensweise aufgrund von Vorhersageungenauigkeiten zwar immer noch eine gewisse Wassermenge in die Schnorcheleinrichtung eindringen kann, diese Wassermenge aber in erheblichen Masse geringer als diejenige ist, die bislang bei Schnorchelfahrt eines Unterseeboots in die Schnorcheleinrichtung eindringt.

Vor allem zu Beginn des erfindungsgemäßen Verfahrens besteht die Möglichkeit, dass Wasser in die Schnorcheleinrichtung eindringen kann. Dies liegt darin begründet, dass in dieser Anfangsphase sehr wenige Messwerte für den Wasserstand an dem Schnorchel, welche die Stützpunkte für eine nachfolgende Extrapolation des zukünftigen Wasserstandsverlauf bilden, vorliegen, was typischerweise die Genauigkeit der Vorausberechnung des zukünftigen Verlaufs des Wasserstands beeinträchtigt. Insofern ist in vorteilhafter Weiterbildung des erfindungsgemäßen Verfahrens vorgesehen, dass die zeitliche Erfassung des Wasserstandes fortwährend wiederholt wird und die Vorausberechnung des Wasserstandes auf der Grundlage der zunehmenden Messwerte aktualisiert wird. Hierdurch wird der vorausberechnete zukünftige Wasserstandsverlauf mit zunehmenden Messwerten für den Wasserstand immer besser an den tatsächlichen Verlauf des Wasserstandes angenähert.

Zum Ermitteln des Wasserstandes können beispielsweise solche Messverfahren eingesetzt werden, wie sie zur Ermittlung der Standhöhe von Flüssigkeiten bei Füllstandsmessungen verwendet werden. Zur rechnerischen Modellierung des zukünftigen Wasserstandsverlaufs an dem Schnorchel können grundsätzlich alle hierfür geeigneten mathematischen Prognosemethoden eingesetzt werden.

Die Vorrichtung zur Steuerung eines Kopfventils an einem Schnorchel eines Unterseeboots dient vorzugsweise zur Ausführung des oben beschriebenen Steuerungsverfahrens. Sie weist Mittel zur Erfassung des Wasserstandes an dem Schnorchel auf. Diese Mittel beinhalten zumindest einen Sensor, welcher direkt oder indirekt den Wasserstand an dem Schnorchel erfassen kann. Mit den Mitteln zur Erfassung des Wasserstandes sind Mittel zur Vorausberechnung des Wasserstandes signalverbunden. Diese Mittel zur Vorausberechnung des Wasserstandes sind zur Ansteuerung des Kopfventils ausgebildet. Teil dieser Mittel ist eine vorzugsweise elektronische Rechnereinheit, welche unter Einbeziehung der von den Mitteln zur Erfassung des Wasserstandes zur Verfügung gestellten Werte den zu erwartenden Wasserstandsverlauf errechnet und in Abhängigkeit von diesem Wasserstandsverlauf ein das Schließen oder Öffnen des Kopfventils veranlassendes Steuersignal erzeugt.

Vorteilhaft weist die Vorrichtung einen an dem Unterseeboot angeordneten Drucksensor auf. Dieser Drucksensor dient zur Erfassung des Wasserstandes an dem Schnorchel und ist vorzugsweise an einem Ort angeordnet, welcher sich bei aus dem Turm des Unterseeboots ausgefahrenem Schnorchel unterhalb des Schnorchelkopfes und damit einhergehend unterhalb des dort angeordneten Kopfventils befindet. Dabei kann der Drucksensor zum Beispiel direkt an den Schnorchel oder im Bereich des oberen Endes des Turms des Unterseeboots angeordnet sein. Prinzipiell ist die Anordnung des Drucksensors an dem Unterseeboot aber beliebig. Der Drucksensor ist bevorzugt zur Ermittlung des hydrostatischen Drucks ausgebildet, der durch die Höhe der über dem Sensor stehenden Wassersäule erzeugt wird. Insofern ist der gemessene Druck ein direktes Maß für den vertikalen Abstand des Sensors von der darüber befindlichen Wasseroberfläche.

Alternativ zu der Verwendung eines Drucksensors zur Ermittlung des Wasserstandes kann vorteilhafterweise an dem Unterseeboot ein induktiver Sensor vorgesehen sein, wobei an dem Schnorchel ein Schwimmkörper beweglich geführt sein kann, welcher einen ferromagnetischen Körper oder einen Permanentmagneten trägt, dessen Abstand von dem induktiven Sensor, welcher dem Abstand der Wasseroberfläche von dem Sensor entspricht, von Letzterem erfasst wird. Möglich sind auch Messverfahren mit Hilfe von Laser oder Radar.

Nachfolgend ist die Erfindung anhand einer Zeichnung näher erläutert. In der Zeichnung zeigt:
Fig. 1 : in schematisch sehr stark vereinfachter Darstellung einen oberen Turmbereich eines Unterseeboots mit dort ausgefahrenem Schnorchel,
Fig. 2 : die Darstellung nach Fig. 1, wobei der Schnorchel in einem Wellenberg eingetaucht ist,
Fig. 3 : in schematisch sehr stark vereinfachter Darstellung ein zum Teil dargestelltes Unterseeboot bei Tauchfahrt in Sehrohrtiefe und
Fig. 4 : eine Gegenüberstellung der Ventilzustände bei drei unterschiedlichen Ansteuerungen eines an einem Schnorchel angeordneten Kopfventils.

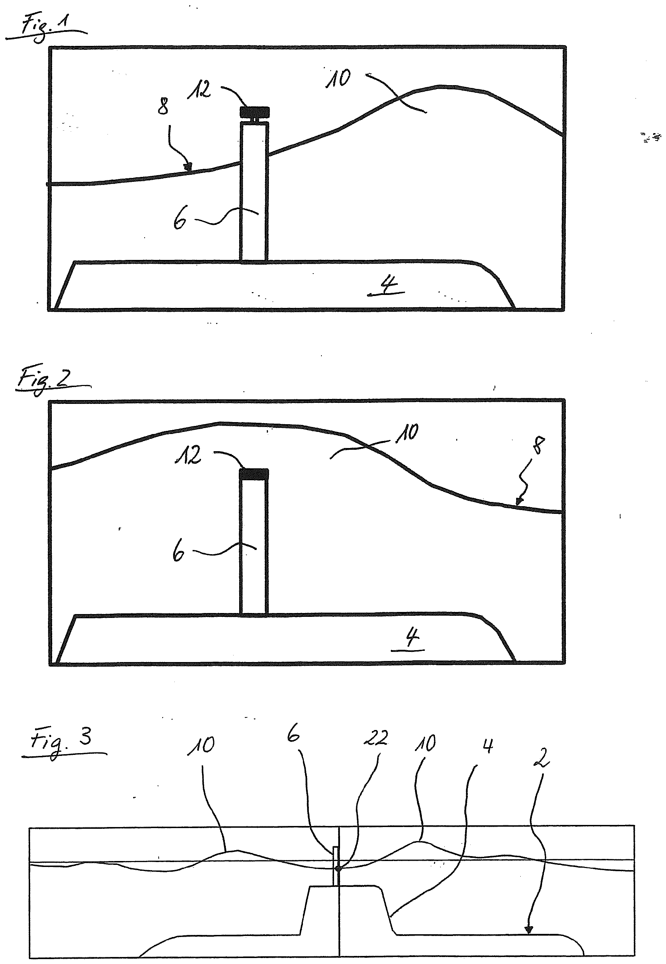

Die Figuren 1 - 3 zeigen ein Unterseeboot 2 bei Fahrt in Sehrohrtiefe, wobei in den Figuren 1 und 2 lediglich ein oberer Bereich eines Turms 4 des Unterseeboots 2 dargestellt ist. An dem oberen Ende des Turmes 4 ragt ein aus dem Turm ausgefahrener Schnorchel 6 aus dem Turm 4 heraus. Das obere Ende des Schnorchels 6, welches auch als Schnorchelkopf bezeichnet wird, ist normalerweise oberhalb einer Wasseroberfläche angeordnet, kann aber, wie in Figur 2 dargestellt, bei stärkerem Seegang im Wellenberge 10 eintauchen. Die Wasseroberfläche in Bezug zum Schnorchelkopf wird nachfolgend auch als Wasserstand 8 bezeichnet.

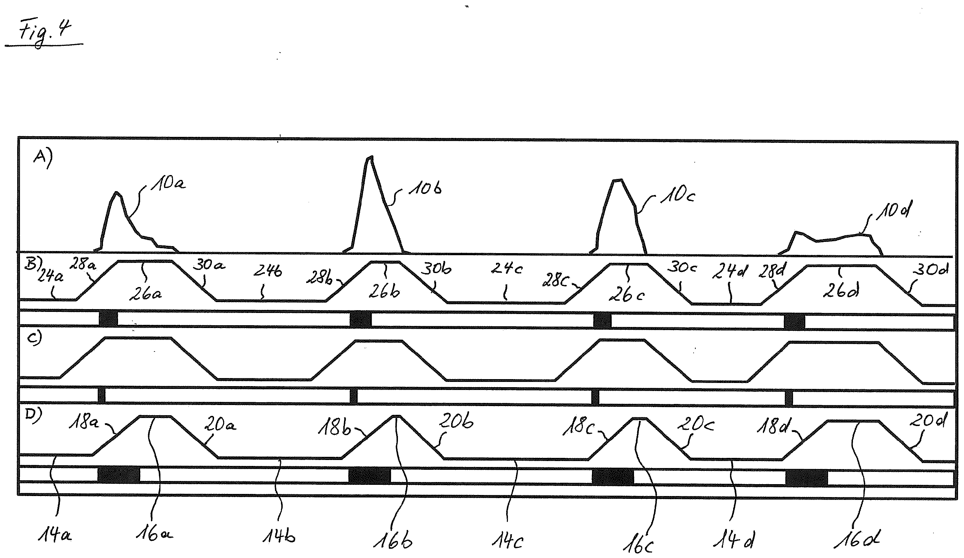

Beim Eintauchen des Schnorchelkopfes in einen Wellenberg 10 soll ein an dem Schnorchelkopf angeordnetes Kopfventil 12 ein Eindringen von Wasser in die Schnorcheleinrichtung des Unterseeboots 2 verhindern. Zur Steuerung dieses Kopfventils 12 war bislang direkt an dem Kopfventil 12 ein Sensor angeordnet, der aufgrund des Wasserkontakts beim Eintauchen des Schnorchels 6 in einen Wellenberg 10 ein das Schliessen des Kopfventils 12 veranlassendes Steuersignal erzeugt und beim Austreten des Sensors aus dem Wellenberg 10 ein das Öffnen des Kopfventils 12 veranlassendes Steuersignal erzeugt. Diese Ansteuerung wird aus einem Bereich D) der Fig. 4 deutlich.

In Fig. 4 sind im Bereich A) die das Kopfventil 12 überflutenden Abschnitte von vier in zeitlichen Abständen aufeinander folgenden Wellenbergen 10a, 10b, 10c und 10d dargestellt. Im Bereich D) von Fig. 4 symbolisieren die Abschnitte 14a, 14b, 14c und 14d ein geöffnetes Kopfventil 12 und die Abschnitte 16a, 16b, 16c und 16d ein geschlossenes Kopfventil 12. Bei Wasserkontakt des an dem Kopfventil 12 angeordneten Sensors veranlasst der Sensor das Schließen des Kopfventils 12 und beim Austritt aus den Wellenbergen 10a, 10b, 10c und 10d das Öffnen des Kopfventils 12. Der Schließvorgang wird im Bereich D) von Fig. 4 durch die Abschnitte 18a, 18b, 18c und 18d und der Öffnungsvorgang durch die Abschnitte 20a, 20b, 20c und 20d symbolisiert. Die Dauer für das Schließen des Kopfventils 12 wird gemäß derzeitigem technischen Stand als etwa eine Sekunde angenommen. Während des Schließvorgangs dringt Wasser über den Schnorchel 6 in die Schnorcheleinrichtung des Unterseeboots 2 ein, das abgepumpt werden muss. In Bereich D) von Fig. 4 ist die während des Schließvorgangs in die Schnorcheleinrichtung gelangende Wassermenge durch die schwarzen Bereiche unterhalb der Abschnitte 18a, 18b, 18c und 18d gekennzeichnet.

Wird das Kopfventil 12 nach dem erfindungsgemäßen Steuerungsverfahren gesteuert, weist die Vorrichtung hierzu einen Drucksensor 22 auf (Fig. 3). Der Drucksensor 22 ist mit Abstand unterhalb des oberen Endes des Schnorchels 6 und des dort angeordneten Kopfventils 12 angeordnet. Mit dem Drucksensor 22 wird kontinuierlich der Wasserstand 8 an dem Schnorchel 6 ermittelt. Auf der Grundlage der von dem Drucksensor 22 ermittelten Werte für den Wasserstand 8 wird der zukünftige Verlauf des Wasserstandes 8 in der Vorrichtung vorausberechnet und das Kopfventil 12 von der Vorrichtung 0,9 Sekunden vor dem prognostizierten Eintauchen des Schnorchelkopfes in einen Wellenberg 10a, 10b, 10c und 10d schließend gestellt. Dies ist in dem Bereich B) von Fig. 4 dargestellt. Hier bedeuten die Abschnitte 24a, 24b, 24c und 24d ein geöffnetes Kopfventil 12, die Abschnitte 26a, 26b, 26c und 26d ein geschlossenes Kopfventil 12, die Abschnitte 28a, 28b, 28c und 28d die Schließvorgänge und die Abschnitte 30a, 30b, 30c und 30d die Öffnungsvorgänge. Unterhalb der Abschnitte 24a, 24b, 24c und 24d symbolisieren die schwarzen Bereiche in Bereich B) von Fig. 4 die Wassermengen, die bei Einsatz des erfindungsgemässen Verfahrens in die Schnorcheleinrichtung des Unterseeboots 2 eindringen. Ein Vergleich dieser Wassermengen mit den im Bereich D) von Fig. 4 dargestellten Wassermengen zeigt, dass diese durch den Einsatz des erfindungsgemäßen Verfahrens und der Vorrichtung im Vergleich zu der bislang üblichen Ansteuerung des Kopfventils 12 erheblich verringert werden.

### Bezugszeichenliste

- 2: Unterseeboot
- 4: Turm
- 6: Schnorchel
- 8: Wasserstand
- 10, 10a, 10b, 10c, 10d: Wellenberg
- 12: Kopfventil
- 14a, 14b, 14c, 14d: Abschnitt
- 16a, 16b, 16c, 16d: Abschnitt
- 18a, 18b, 18c, 18d: Abschnitt
- 20a, 20b, 20c, 20d: Abschnitt
- 22: Drucksensor
- 24a, 24b, 24c, 24d: Abschnitt
- 26a, 26b, 26c, 26d: Abschnitt
- 28a, 28b, 28c, 28d: Abschnitt
- 30a, 30b, 30c, 30d: Abschnitt

## Patentansprüche

1. Verfahren zur Steuerung eines Kopfventils (12) an einem Schnorchel (6) eines Unterseeboots (2), bei dem der zeitliche Verlauf des Wasserstandes (8) an dem Schnorchel (6) gemessen wird und ein auf Grundlage dieser Messwerte zu erwartender Wasserstandsverlauf vorausberechnet wird und das Kopfventil (12) zumindest auch auf der Grundlage der Vorausberechnung des Wasserstandes (8) gesteuert wird.

2. Verfahren nach Anspruch 1, bei dem die zeitliche Erfassung des Wasserstandes (8) fortwährend wiederholt wird und die Vorausberechnung des Wasserstandes (8) auf der Grundlage der zunehmenden Messwerte aktualisiert wird.

## Claims

1. Method for controlling a head valve (12) on a snorkel (6) of a submarine (2), in which the temporal profile of the water level (8) at the snorkel (6) is measured, and a water level profile to be expected on the basis of these measurement values is pre-calculated, and the head valve (12) is controlled at least also on the basis of the pre-calculation of the water level (8).

2. Method according to Claim 1, in which the temporal recording of the water level (8) is constantly repeated, and the pre-calculation of the water level (8) is updated on the basis of the increasing number of measurement values.

## Revendications

1. Procédé de commande d'un clapet d'extrémité (12) sur un schnorchel (6) d'un sous-marin (2), dans lequel l'évolution dans le temps du niveau d'eau (8) au niveau du schnorchel (6) est mesurée et une évolution du niveau d'eau attendue est calculée au préalable sur la base de ces valeurs de mesure et le clapet d'extrémité (12) est commandé au moins également sur la base du calcul préalable du niveau d'eau (8).

2. Procédé selon la revendication 1, dans lequel la détection dans le temps du niveau d'eau (8) est répétée en continu et le calcul préalable du niveau d'eau (8) est mis à jour sur la base des valeurs de mesure croissantes.
